# EUROPÄISCHE PATENTSCHRIFT

(11) **EP 2 203 790 B1**
(45) Veröffentlichungstag und Bekanntmachung des Hinweises auf die Patenterteilung: **08.11.2017**
(21) Anmeldenummer: 08785850.2
(22) Anmeldetag: 03.09.2008
(51) Int. Cl.: G03H 1/20, B42D 25/328

(54) **VERFAHREN UND VORRICHTUNG ZUR INDIVIDUELLEN HOLOGRAFISCHEN TROMMELBELICHTUNG**
METHOD AND DEVICE FOR INDIVIDUAL HOLOGRAPHIC DRUM EXPOSURE
PROCÉDÉ ET DISPOSITIF DE POSE HOLOGRAPHIQUE INDIVIDUEL À TAMBOUR

(30) Priorität: 04.09.2007 DE 102007042385
(43) Veröffentlichungstag der Anmeldung: 07.07.2010
(73) Patentinhaber: Bundesdruckerei GmbH, 10969 Berlin (DE)
(72) Erfinder: LEOPOLD, André, 10119 Berlin (DE); KUNATH, Christian, 12203 Berlin (DE); EHREKE, Jens, 12587 Berlin (DE); HOCHENBLEICHER, Gerhard, 82256 Fürstenfeldbruck (DE); KLEPZIG, Christian, 81379 München (DE); LANGGASSNER, Michael, 85652 Pliening (DE)
(74) Vertreter: Patentanwälte Bressel und Partner mbB
(86) Internationale Anmeldenummer: PCT/EP2008/007408
(87) Internationale Veröffentlichungsnummer: WO 2009/030502

(56) Entgegenhaltungen:
- EP-A- 0 401 566
- EP-A- 0 896 260
- JP-A- 8 123 307
- US-A1- 2006 289 114

## Beschreibung

Die Erfindung betrifft ein Verfahren zum Herstellen individualisierter Hologramme, die insbesondere als Sicherheitselemente für Sicherheits- und/oder Wertdokumente verwendet werden, sowie eine Vorrichtung zum Herstellen von individualisierten Hologrammen.

Sicherheitselemente dienen dazu, ein Sicherheits- und/oder Wertdokument gegen Fälschung oder Kopieren zu sichern. Eine Art von Sicherheitselementen stellen Hologramme dar. In Sicherheitselementen sind oftmals auch individualisierende Angaben, beispielsweise Seriennummer, Ausweisnummer, biometrische Daten, Bilder (Passbilder), etc., enthalten. Diese können in Klarschrift bzw. Bildform oder optisch codiert bzw. maschinenlesbar vorgesehen sein.

In der EP 0 401 566 A2 wird das Kopieren eines in einer zylindrischen Oberfläche ausgebildeten Masters in eine Hologramm beschrieben.

Aus der JP 8-123307 A ist eine Vorrichtung zum Kopieren eine Hologramms bekannt, bei der ein Film über eine Rolle geführt wird, in der ein Masterhologramm ausgebildet ist. Der zum Kopieren verwendete Lichtstrahl wird in einem akusto-optischen Modulator moduliert und über einen Polygon-Spiegel parallel zur Rolle abgelenkt.

Aus der US 2006/0289114A1 ist eine Vorrichtung bekannt, bei der in den Hologrammfilm zusätzlich zu einem Hologramm ein Positions- und Individualisierungscode gedruckt werden. Derselbe Positions- und Individualisierungscode wird auf ein Sicherheitsdokument gedruckt, auf den das fertig entwickelte Hologramm geklebt wird.

Das grundsätzliche Vorgehen bei der Herstellung von Hologrammen mit individualisierenden Angaben ist beispielsweise in der Literaturstelle EP 0 896 260 A2 beschrieben. Die Grundzüge werden folgend kurz erläutert. Zunächst wird ein holografischer Master mit einem Masterhologramm hergestellt. Dann wird der holografische Master hinter ein holografisches Aufzeichnungsmaterial positioniert. Kohärentes Licht, beispielsweise aus einem Laser, wird auf die dem holografischen Master abgewandte Seite des holografischen Aufzeichnungsmaterials eingestrahlt, typischerweise mit definierter Wellenlänge und definiertem Inzidenzwinkel, nach Maßgabe des vom holografischen Master zu rekonstruierenden holografischen Musters. Es durchdringt das holografische Aufzeichnungsmaterial und wird vom Master gebeugt bzw. reflektiert, womit das Hologramm durch Interferenz mit dem einfallenden Licht erzeugt wird und sich das Hologramm in dem holografischen Aufzeichnungsmaterial abbildet und durch photochemische- oder photophysikalische Prozesse im holografischen Aufzeichnungsmaterial speichert. Dabei kann der holografische Master so ausgelegt sein, dass er für mehrere Wellenlängen empfindlich ist und diese entsprechend beugt.

Aus der Praxis sind digitale Projektoren bekannt, welche mit Spatial Light Modulatoren in Form von Liquid Crystal Displays (LCD) arbeiten. Die Funktionsweise entspricht beispielsweise der Projektion eines Dias, wobei der Spatial Light Modulator anstelle des Dias tritt.

Aus der Praxis sind des Weiteren digitale Projektoren bekannt, welche ein DMD (Digital Micro Mirror Device) als Spatial Light Modulator umfassen. Aus der Literaturstelle DE 2005 054 396 A1 ist der Einsatz eines Spatial Light Modulators in Form eines Digital Micro Mirror Device (DMD) zur Markierung von Gegenständen bekannt.

Da die sich im Interferenzmuster des holografischen Aufzeichnungsmaterials ausbildenden Interferenzstrukturen in der Größenordnung von einem Mikrometer liegen, muss sich das holografische Aufzeichnungsmaterial während der Aufzeichnung jeweils in einer definierten Stellung befinden. Da das holografische Aufzeichnungsmaterial in der Regel als Film ausgebildet ist, benötigt das holografische Aufzeichnungsmaterial nach dem Anordnen relativ zu dem holografischen Master bei den im Stand der Technik bekannten Verfahren und Vorrichtungen eine Beruhigungszeit, die in der Größenordnung von einigen Sekunden liegt. Diese Beruhigungszeit liegt in der Größenordnung jener Zeit, die benötigt wird, um ein Hologramm in dem holografischen Aufzeichnungsmaterial zu belichten. Selbst wenn man diese Belichtungszeit stark verkürzen könnte, würde die Beruhigungszeit eine Steigerung des Durchsatzes bei der Herstellung von Hologrammen lediglich um einen Faktor 2 zulassen.

Aufgabe der Erfindung ist es daher, ein Herstellungsverfahren sowie eine Vorrichtung zum Herstellen von individualisierten Hologrammen zu schaffen, mit denen eine Fertigungszeit reduziert ist.

### Definitionen

Ein Sicherheitselement ist eine bauliche Einheit, die zumindest ein Sicherheitsmerkmal umfasst. Ein Sicherheitselement kann eine selbstständige bauliche Einheit sein, die mit einem Sicherheits- und/oder Wertdokument verbunden, beispielsweise verklebt werden kann, es kann sich aber auch um einen integralen Bestandteil eines Sicherheits- und/oder Wertdokumentes handeln. Ein Beispiel für erstes ist ein auf ein Sicherheits- und/oder Wertdokument aufklebbares Visum. Ein Beispiel für letzteres ist ein in einen Geldschein oder einen Ausweis integriertes, beispielsweise einlaminiertes Hologramm.

Ein Sicherheitsmerkmal ist eine Struktur, die nur mit (gegenüber einfachem Kopieren) erhöhtem Aufwand oder gar nicht unautorisiert herstellbar bzw. reproduzierbar ist.

Ein Muster besteht typischerweise aus einer Vielzahl nebeneinander angeordneter Mustereinheiten bzw. Pixel. Die Mustereinheiten bzw. Pixel eines Musters sind einander zugeordnet und in definierter Weise lateral zueinander angeordnet, typischerweise in zwei Raumdimensionen und ergeben in der Gesamtbetrachtung eine Darstellung, beispielsweise ein Bild, Symbol, Logo, Schriftzug (Buchstaben, Zahlen, alphanumerisch), oder Code (z.B. Barcode).

Als Sicherheits- und/oder Wertdokumente seien lediglich beispielhaft genannt: Personalausweise, Reisepässe, ID-Karten, Zugangskontrollausweise, Visa, Steuerzeichen, Tickets, Führerscheine, Kraftfahrzeugpapiere, Banknoten, Schecks, Postwertzeichen, Kreditkarten, beliebige Chipkarten und Haftetiketten (z.B. zur Produktsicherung). Solche Sicherheits- und/oder Wertdokumente weisen typischerweise ein Substrat, eine Druckschicht und optional eine transparente Deckschicht auf. Ein Substrat ist eine Trägerstruktur, auf welche die Druckschicht mit Informationen, Bildern, Mustern und dergleichen aufgebracht wird. Als Materialien für ein Substrat kommen alle fachüblichen Werkstoffe auf Papier- und/oder Kunststoffbasis in Frage.

Ein Spatial Light Modulator (SLM) erlaubt eine zweidimensional ortsaufgelöste Beleuchtung bzw. Bestrahlung eines meist flächigen Gegenstandes mit modulierter Intensität. Hierbei kann es sich beispielsweise um einen DMD (Digital Micro Mirror Device) Chip, ein LCD (Liquid Crystal Display) Transmissionsdisplay oder ein LCoS (Liquid Crystal on Silicon) Display handeln. Allen ist gemeinsam, dass eine Vielzahl von SLM-Pixeln gebildet ist, wobei jedes SLM-Pixel unabhängig von anderen SLM-Pixeln aktivierbar oder deaktivierbar ist (auch Zwischenstufen sind möglich), wodurch durch entsprechende Ansteuerung der SLM-Pixel sich Muster oder Bilder projizieren lassen. Durch die freie Ansteuerbarkeit können auch ohne weiteres verschiedene Bilder oder Muster in zeitlicher Folge hintereinander generiert werden, beispielsweise in Form eines Passfotos.

Ein Code bzw. Muster ist individualisierend, wenn er einzigartig für eine Person oder einen Gegenstand oder eine Gruppe von Personen oder Gegenständen aus einer größeren Gesamtmenge an Personen oder Gegenständen ist. Ein für eine Gruppe von Personen innerhalb der Gesamtmenge der Einwohner eines Landes individualisierender Code ist beispielsweise die Stadt des Wohnortes. Ein für eine Person individualisierender Code ist beispielsweise die Nummer des Personalausweises oder das Passbild. Ein für eine Gruppe von Geldscheinen innerhalb der Gesamtmenge der Geldscheine individualisierender Code ist die Wertigkeit. Für einen Geldschein individualisierend ist die Seriennummer. Beispiele für nicht individualisierende Codes bzw. Muster sind Wappen, Siegel, Hoheitszeichen, etc.

Ein holografisches Aufzeichnungsmaterial ist eine Schicht aus einem Material, welches photosensitiv ist, und in welcher sich Holografien durch irreversible, aber auch reversible photochemische und/oder photophysikalische Prozesse im Wege der Belichtung speichern lassen. Lediglich beispielhaft seien die in der Holografie oft verwendeten Photopolymere genannt.

Der Begriff der Farbe wird im Rahmen der Erfindung als eine Wellenlänge bzw. eine Spektrallinie verstanden. Mischfarben weisen mehrere verschiedene Wellenlängen bzw. Spektrallinien auf. Der Begriff der Farbe umfasst daher neben dem sichtbaren Bereich auch UV und IR.

Grundzüge der Erfindung und bevorzugte Ausführungsformen.

Zur Lösung des Problems werden ein Verfahren gemäß Anspruch 1 und eine Vorrichtung gemäß Anspruch 7 vorgeschlagen. Das holografische Aufzeichnungsmaterial wird anliegend an eine zylindrische Trommel angeordnet und die Trommel beim Abtasten des holografischen Masters um eine Trommelachse der Trommel gedreht. Dadurch, dass das holografische Aufzeichnungsmaterial an der Trommel anliegt, findet eine Beruhigung des Aufzeichnungsmaterials sehr viel schneller statt. Ferner kann das holografische Aufzeichnungsmaterial, wenn es beispielsweise als lang gestreckter Film ausgebildet ist, in dem eine Vielzahl von Hologrammen belichtet wird, anliegend an die Trommel in einem Bereich der Trommel angeordnet werden, d.h. in einem Sektor der Trommel angeordnet werden, der von dem Bereich winkelmäßig entfernt ist, an dem eine Aufzeichnung des Hologramms über eine Belichtung erfolgt. Insbesondere wird somit ein Verfahren zum Herstellen von individualisierten Hologrammen vorgeschlagen, bei dem ein streifen- oder zeilenförmiger Lichtstrahl erzeugt wird, der Lichtstrahl in einem flächig ausgebildeten Spatial Light Modulator (SLM) individuell moduliert wird, ein holografisches Aufzeichnungsmaterial auf einem holografischen Master angeordnet wird und der individuell modulierte Lichtstrahl so geführt wird, dass zumindest ein Teil des individuell modulierten Lichtstrahls an dem holografischen Master gebeugt und/oder reflektiert und in dem holografischen Aufzeichnungsmaterial mit dem individuell modulierten Lichtstrahl zur Interferenz gebracht wird, so dass sich in dem holografischen Aufzeichnungsmaterial ein das individualisierte Hologramm repräsentierendes Interferenzmuster bildet, wobei der individuell modulierte Lichtstrahl relativ zu dem holografischen Aufzeichnungsmaterial und dem holografischen Master bewegt wird, um den gesamten holografischen Master abzutasten, wobei vorgesehen ist, dass das holografische Aufzeichnungsmaterial anliegend an die Trommel angeordnet wird und die Trommel beim Abtasten des holografischen Masters um eine Trommelachse der Trommel gedreht wird. Durch ein Zuführen des holografischen Aufzeichnungsmaterials anliegend an die Trommel der Zuführeinrichtung oder ein Trommelsegment kann erreicht werden, dass eine Beruhigung des Aufzeichnungsmaterials schneller und/oder zeitlich vorgelagert vor einer Belichtung stattfindet. Wird das holografische Aufzeichnungsmaterial beispielsweise fast einen vollen Umfang der Trommel überdeckend anliegend an der Trommel oder dem Trommelsegment geführt, so kann das anliegende Anordnen beabstandet von dem Ort, an dem die Belichtung des Aufzeichnungsmaterials erfolgt, vorgenommen werden und somit zeitlich vorgelagert erfolgen. Hierdurch lässt sich eine Beschleunigung des Produktionsprozesses erreichen und der Durchsatz einer Vorrichtung deutlich steigern, ohne eine Qualitätseinbuße hinnehmen zu müssen, die bei einer Abbildung eines Hologramms in einem nicht in Ruhe befindlichen holografischen Aufzeichnungsmaterial dessen Qualität reduziert. Eine solche Reduktion tritt bei dem vorgeschlagenen Verfahren nicht auf, da sich das holografische Aufzeichnungsmaterial durch das Anliegen an die Trommel zum Zeitpunkt seiner Belichtung bereits ausreichend beruhigt hat.

Der Lichtstrahl wird als ein streifenförmiger Lichtstrahl erzeugt. Hierfür kann die Vorrichtung eine Streifenlichtquelle, die einen streifenförmigen Lichtstrahl erzeugt, umfassen. Die Lichtquelle ist in jedem Fall so ausgebildet, dass sie ausreichend kohärentes Licht erzeugt. Die Kohärenz muss sowohl räumlich als auch zeitlich gegeben sein, um ein holografisches Interferenzbild erzeugen zu können. Um einen streifenförmigen Lichtstrahl zu erzeugen, kann bei einer Ausführungsform eine Streifenerzeugungsoptik zum Erzeugen eines streifenförmigen Lichtstrahls vorgesehen sein, die insbesondere eine Zylinderlinse und/oder ein holografisches optisches Element umfasst. Dem Fachmann sind weitere optische Elemente bekannt, um einen streifenförmigen Lichtstrahl zu erzeugen. Bei der Lichtquelle handelt es sich bevorzugt um einen Laser, der Licht im infraroten, sichtbaren und/oder ultravioletten Wellenlängen- bzw. Frequenzbereich erzeugen kann.

Da bei einer Verwendung eines Zeilendisplays zur Abbildung eines flächigen Musters ein Wechsel der individuellen Modulation an den Zeilenübergängen zeitlich abrupt erfolgt, macht sich dieses auch in dem erzeugten Hologramm an den Zeilenübergängen nachteilig bemerkbar. Daher wird erfindungsgemäß der Spatial Light Modulator flächig ausgebildet und mit einem streifenförmigen Lichtstrahl abgetastet.

Dadurch, dass erfindungsgemäß der flächig ausgebildete Spatial Light Modulator mit einer Abscanngeschwindigkeit des Lichtstrahls abgescannt wird, tritt diese Geschwindigkeit zu der Geschwindigkeit des sich anliegend an der Trommel bewegenden holografischen Aufzeichnungsmaterials hinzu. Da vorzugsweise eine Abbildungsoptik mit einem Abbildungsfaktor m verwendet wird, bewegt sich der individuell modulierte Lichtstrahl an einem Auftreffort, der für streifenförmiges Licht eine Auftrefflinie ist, auf dem holografischen Material in einer Tangentialebene mit einer um den Abbildungsfaktor m multiplizierten Abscanngeschwindigkeit. Die optische Führung des Lichtstrahls ist somit so zu wählen, dass der individuell modulierte Lichtstrahl zwar ortsfest bezüglich der Drehachse der Trommel auf die Trommel trifft, sich jedoch die hierbei durch den Lichtstrahl "transportierte" individuell modulierte Information synchronisiert mit der Filmbewegung bewegt. Dies bedeutet, dass der Lichtstrahl den Spatial Light Modulator in der Zeit abscannt, in der sich das holografische Aufzeichnungsmaterial und der holografische Master einmal über ihren gesamten Aufzeichnungs- bzw. Abbildungs- oder Abtastbereich bewegen. Hierdurch treten keine abrupten Übergänge an Pixelzeilenübergängen auf. Es entsteht ein "gleichmäßiges" Hologramm.

Bei einer bevorzugten Ausführungsform ist vorgesehen, dass die Geschwindigkeit des (abgebildeten) individuell modulierten Lichtstrahls über einen um die Spiegeldrehachse drehbar gelagerten Umlenkspiegel auf das holografische Aufzeichnungsmaterial gelenkt wird, wobei eine Drehgeschwindigkeit des Umlenkspiegels so festgelegt ist, dass für einen vor dem Umlenken ortsfesten individuell modulierten Lichtstrahl ein Auftreffort (eine Auftrefflinie) des individuell modulierten Lichtstrahls auf dem holografischen Aufzeichnungsmaterial sich in der Tangentialebene des Aufzeichnungsmaterials mit einer Geschwindigkeit bewegt, die einer Tangentialgeschwindigkeit des holografischen Aufzeichnungsmaterials aufgrund der Drehung der Trommel entspricht, und eine Abscanngeschwindigkeit so festgelegt wird, dass der Auftreffort des individuell modulierten Lichtstrahls auf dem holografischen Aufzeichnungsmaterial sich bei sich nicht drehendem Umlenkspiegel in der Tangentialebene mit einer Geschwindigkeit bewegt, die eine Tangentialgeschwindigkeit des holografischen Aufzeichnungsmaterials aufgrund der Drehung der Trommel oder des Trommelsegments kompensiert. Kompensieren heißt, dass sie betragsmäßig gleich, aber in eine entgegengesetzte Richtung weisend ist. Die Vorrichtung umfasst somit einen flächig ausgebildeten Spatial Light Modulator und einen um eine Spiegelachse drehbar gelagerten Umlenkspiegel, der relativ zu dem Spatial Light Modulator und der Trommel oder dem Trommelsegment angeordnet ist, um den (abgebildeten) individuell modulierten Lichtstrahl auf das holografische Aufzeichnungsmaterial zu lenken, wobei mit dem Umlenkspiegel eine Antriebseinrichtung gekoppelt ist, die eine Drehgeschwindigkeit des Spiegels so regelt, dass für einen vor dem Umlenken ortsfesten individuell modulierten Lichtstrahl ein Auftreffort (eine Auftrefflinie) des individuell modulierten Lichtstrahls auf dem holografischen Aufzeichnungsmaterial sich in der Tangentialebene des Aufzeichnungsmaterials mit einer Geschwindigkeit bewegt, die einer Tangentialgeschwindigkeit des holografischen Aufzeichnungsmaterials aufgrund der Drehung der Trommel oder des Trommelsegments entspricht und eine Abscanngeschwindigkeit für das Abscannen des Spatial Light Modulators so festgelegt ist, dass der Auftreffort des individuell modulierten Lichtstrahls auf dem holografischen Aufzeichnungsmaterial sich bei sich nicht drehendem Umlenkspiegel in der Tangentialebene mit einer Geschwindigkeit bewegt, die die Tangentialgeschwindigkeit des holografischen Aufzeichnungsmaterials aufgrund der Drehung der Trommel oder des Trommelsegments kompensiert. Der Umlenkspiegel sorgt somit dafür, dass ein ortsfester individuell modulierter Lichtstrahl immer auf denselben Ort des Aufzeichnungsmaterials auftrifft, wenn sich dieses aufgrund der Drehung der Trommel dreht. Die Abscanngeschwindigkeit des Spatial Light Modulators wird nun so gewählt, dass der abgebildete individuell modulierte Lichtstrahl eine Bewegung des Aufzeichnungsmaterials so kompensiert, dass während des Abscannens des Spatial Light Modulators auch der gesamte holografische Master einmal abgescannt wird. Die Auftrefflinie ist somit bezüglich der Trommeldrehachse ortsfest und vorzugsweise kollinear. Eine besonders einfache Strahlführung erreicht man mit einem Verfahren und einer Vorrichtung, bei denen der holografische Master in die zylindrische Trommel eingearbeitet wird oder ist. Beim Zuführen des holografischen Aufzeichnungsmaterials wird dieses somit vor dem holografischen Master angeordnet. Beim Belichten des holografischen Aufzeichnungsmaterials wird dieses zunächst von dem individuell modulierten Lichtstrahl durchstrahlt, der dann auf den holografischen Master trifft und zumindest zum Teil des individuell modulierten Lichtstrahls gebeugt und/oder reflektiert wird und in dem holografischen Aufzeichnungsmaterial ein das individualisierende Hologramm repräsentierendes Interferenzmuster ausbildet. Das Einarbeiten des holografischen Masters in die Trommel bzw. das Trommelsegment bietet den Vorteil, dass das Abscannen des holografischen Masters und des holografischen Aufzeichnungsmaterials gemeinsam synchronisiert durch die Trommelbewegung, d.h. die Drehung der Trommel um die Trommeldrehachse, ausgeführt werden kann. Hierdurch wird eine vereinfachte optische Strahlführung möglich gemacht.

Es soll an dieser Stelle hervorgehoben werden, dass der in die Trommel eingearbeitete holografische Master nicht so ausgebildet sein muss, dass er einem 360°-Zylindersegment entspricht. Vielmehr können in eine Trommel mehrere identische oder verschiedene holografische Master in eine zylindrische Fläche, vorzugsweise eine zylindrische Mantelfläche, der Trommel eingearbeitet sein. Die Spiegeldrehachse ist bei einer solchen Ausführungsform parallel zur Drehachse der Trommel ausgerichtet. Eine Belichtung bzw. Durchstrahlung des Aufzeichnungsmaterials erfolgt vorzugsweise an einer Schnittlinie bzw. einem Schnittpunkt einer die beiden Achsen verbindenden Linie (n). Auch bei einer solchen Anordnung ändert sich jedoch der Auftreffwinkel des individuell modulierten Lichtstrahls auf das Aufzeichnungsmaterial leicht mit der Drehstellung des Umlenkspiegels, d.h. abhängig von der Abscannposition des Lichtstrahls auf dem Spatial Light Modulator.
Bei einer anderen Ausführungsform ist vorgesehen, dass die zum Abscannen des Lichtstrahls erforderliche Abtastgeschwindigkeit des Lichtstrahls und eine Kompensation der Drehbewegung durch eine translatorische Bewegung eines optischen Systems bewirkt werden. Eine bevorzugte Ausführungsform sieht daher vor, dass quer zur Trommeldrehachse ein optisches System translatorisch bewegt wird, dass ein ortsfest einfallender Lichtstrahl in einen sich relativ zu dem Spatial Light Modulator bewegenden abscannenden Lichtstrahl umgewandelt wird, wobei das optische System mindestens einen Strahlteiler umfasst und der Lichtstrahl über den Strahlteiler auf den Spatial Light Modulator umgelenkt wird und der von dem Spatial Light Modulator individuell modulierte Lichtstrahl durch den Strahlteiler auf das holografische Aufzeichnungsmaterial gelenkt wird. Hierbei kann die translatorische Bewegung mit einer Geschwindigkeit ausgeführt werden, die dazu führt, dass die Geschwindigkeit des auf das Aufzeichnungsmaterial auftreffenden individuell modulierten Lichtstrahls die Bewegung des Aufzeichnungsmaterials aufgrund einer Drehung der Trommel oder des Trommelsegments kompensiert. Bei einer solchen Ausführungsform ist zwischen dem Spatial Light Modulator und dem Auftreffort des individuell modulierten Lichtstrahls ein Strahlteiler angeordnet. Der von dem Spatial Light Modulator individuell modulierte Lichtstrahl passiert hierbei den Strahlteiler in gerader Linie. Somit ist eine Abbildungslänge jeweils konstant, unabhängig von einer Tiefenschärfe der Abbildungsoptik.

Bei einer Weiterbildung der Erfindung ist vorgesehen, dass das optische System zusätzlich den Spatial Light Modulator und einen relativ zu dem Strahlteiler fest ausgerichteten Ablenkspiegel umfasst, wobei das optische System senkrecht zur Trommelachse und zu einer Auftreffrichtung des individuell modulierten Lichtstrahls auf dem holografischen Aufzeichnungsmaterial bewegt wird. Zum Ausführen der translatorischen Bewegung ist das optische System, welches auch als optisches Individualisierungssystem bezeichnet ist, mit einer Verschiebeeinrichtung gekoppelt, die die translatorische Bewegung mit einer Verschiebegeschwindigkeit ausführt.

Die Trommeldrehgeschwindigkeit der Trommel ist vorzugsweise in Abhängigkeit von der Intensität des Lichtstrahls so gewählt, dass eine in das Aufzeichnungsmaterial eingebrachte Energiemenge während einer Durchstrahlungsdauer, die sich aufgrund der Drehung der Trommel oder des Trommelsegments bezüglich des individuell modulierten Lichtstrahls ergibt, wenn der individuell modulierte Lichtstrahl ortsfest bezüglich der Trommeldrehachse ist bzw. gehalten wird, einer zum Aufzeichnen des individualisierten Hologramms in dem Aufzeichnungsmaterial angemessenen Energiemenge entspricht.

Um die einzelnen auftretenden Geschwindigkeiten regeln zu können, ist bei einer Ausführungsform vorgesehen, dass in Trommeldrehachsrichtung außerhalb eines Ausleuchtungsbereichs für das individualisierte Hologramm, bevorzugt neben der Trommel, bevorzugt in einer Tangentialebene der Auftrefflinie des individuell modulierten Lichtstrahls auf das Aufzeichnungsmaterial oder darüber, mindestens ein positionsabhängiger lichtempfindlicher Sensor angeordnet ist, wobei der individuell modulierte Lichtstrahl so ausgebildet ist, dass der positionsempfindliche und lichtempfindliche Sensor beim Durchstrahlen des Aufzeichnungsmaterials von einem Randbereich des individuell modulierten Lichtstrahls überstrichen wird und der mindestens eine Sensor in einen geschlossenen Regelkreis mit einem Regler integriert ist, der für eine Regelung der Drehgeschwindigkeit des Umlenkspiegels oder eine Verschiebegeschwindigkeit des optischen Individualisierungssystems ausgebildet ist, um eine Auftrefflinie des Lichtstrahls auf das Aufzeichnungsmaterial ortsfest bezüglich der Trommeldrehachse zu halten. Hierdurch wird die Möglichkeit geschaffen, eine der Geschwindigkeiten über einen Regelkreis nachzuführen.

Bei einer bevorzugten Weiterbildung ist vorgesehen, dass bezogen auf eine Trommelachsrichtung an einem entgegengesetzten Ende des Ausleuchtungsbereichs für das individualisierte Hologramm mindestens ein weiterer positionsempfindlicher und lichtempfindlicher Sensor angeordnet ist. Hierdurch kann auch eine mögliche Verkippung des streifenförmigen Lichtstrahls bezüglich der Trommeldrehachse festgestellt werden und gegebenenfalls über Stellglieder kompensiert werden.

Um die Drehgeschwindigkeit der Trommel kontrollieren und regeln zu können, ist bei einer bevorzugten Ausführungsform an der Trommel oder dem Trommelsegment ein Inkrementalgeber angeordnet und eine weitere Regeleinheit vorgesehen, um anhand von Signalen des Inkrementalgebers die Trommelgeschwindigkeit zu regeln.

Um einen Auftreffwinkel des modulierten Lichtstrahls zu variieren, ist bei einer Ausführungsform vorgesehen, dass die zum Individualisieren, Führen und Abbilden des Lichtstrahls benötigten Elemente gemeinsam einerseits und die Trommel andererseits um eine durch die Auftrefflinie des individuell modulierten Lichtstrahls festgelegte Schwenkachse relativ zueinander verschwenkbar ausgebildet sind, um eine Auftrefflinie des individuell modulierten Lichtstrahls auf das holografische Aufzeichnungsmaterial und/oder den holografischen Master variieren zu können.

Weitere Vorteile der Erfindung ergeben sich aus der nachfolgenden ausführlichen Beschreibung einzelner bevorzugter Ausführungsbeispiele. Hierbei zeigen:
- Fig. 1: eine schematische Darstellung einer Vorrichtung zum Herstellen eines individualisierten Hologramms, bei der der Spatial Light Modulator abgescannt und über einen Umlenkspiegel auf das holografische Aufzeichnungsmaterial gelenkt wird;
- Fig. 2a und 2b: zwei zeitlich aufeinander folgende Ansichten einer anderen Ausführungsform einer Vorrichtung zum Herstellen individualisierter Hologramme, bei der ein Abscannen des Spatial Light Modulators und ein Kompensieren einer Bewegung des holografischen Aufzeichnungsmaterials mittels einer translatorischen Verschiebung bewirkt ist; und
- Fig. 3: ein Vergleichsbeispiel mit einem zeilenförmigen Spatial Light Modulator.

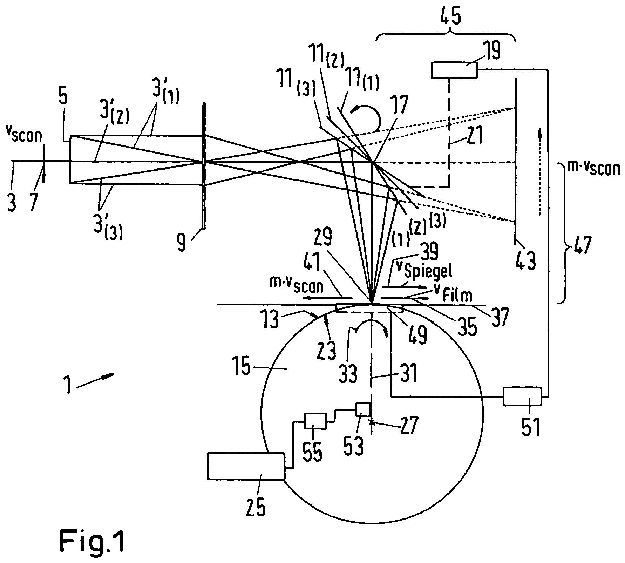

In Fig. 1 ist eine Vorrichtung 1 zum Herstellen eines individualisierten Hologramms schematisch dargestellt. Ein Lichtstrahl 3, der zeilenförmig oder streifenförmig ausgebildet ist und sich senkrecht zur Zeichnungsebene erstreckt, scannt einen Spatial Light Modulator 5 mit einer Geschwindigkeit V_{scan} ab. Der Spatial Light Modulator 5 ist beispielsweise als LCD (Liquid Crystal Display) ausgebildet. Auf dem Spatial Light Modulator 5 werden pixeliert individuelle Informationen in Form eines Musters dargestellt, wobei die Pixel einzeln angesteuert werden können. Die einzelnen Pixel des Spatial Light Modulators 5 modulieren den Lichtstrahl 3 und verwandeln diesen in einen individuell modulierten Lichtstrahl 3'.

Der Lichtstrahl 3 scannt den Spatial Light Modulator 5 in der Darstellung von Fig. 1 mit der Geschwindigkeit V_{scan} von oben nach unten ab, wie mittels eines Pfeils 7 angedeutet ist. Der individuell modulierte Lichtstrahl 3' ist zu drei aufeinander folgenden Zeiten i = 1, 2, 3 dargestellt, wobei die Abfolge durch einen tiefer gestellten eingeklammerten Index angegeben ist. Der individuell modulierte Lichtstrahl 3' wird über eine Abbildungsoptik 9, die einen Vergrößerungsfaktor m aufweist, abgebildet. Über einen drehbar gelagerten Umlenkspiegel 11 wird der individuell modulierte Lichtstrahl 3' auf ein holografisches Aufzeichnungsmaterial 13 gelenkt, welches anliegend an eine Trommel 15 zugeführt wird. Der Umlenkspiegel 11 ist um eine Spiegeldrehachse 17 drehbar, die vorzugsweise in der Spiegelebene des Umlenkspiegels 11 liegt. Der Umlenkspiegel 11 ist hierfür mit einer Antriebseinrichtung 19 gekoppelt, was über eine gestrichelte Linie 21 angedeutet ist.

Um ein Hologramm in dem holografischen Aufzeichnungsmaterial 13 aufzuzeichnen, wird dieses von dem individuell modulierten Lichtstrahl 3' durchstrahlt und trifft auf einen holografischen Master 23, der in die Trommel 15 eingearbeitet ist. Der holografische Master 23 ist vorzugsweise in eine Mantelfläche der Trommel 15 eingearbeitet. Der holografische Master 23 kann sich entlang des gesamten Umfangs der Trommel 15 erstrecken. Ebenso sind Ausführungsformen möglich, bei denen mehrere identische oder verschiedene holografische Master in die Trommel 15 eingearbeitet sind.

Die Trommel 15 ist mit einer Trommelantriebseinrichtung 25 gekoppelt. Diese bewirkt eine Drehung der Trommel um eine Trommelachse 27. Die Trommeldrehachse 27 erstreckt sich senkrecht zur Zeichnungsebene. Sie ist somit parallel zur Spiegeldrehachse 17 und zu der Richtung, in der sich der streifenförmige Lichtstrahl und der individuell modulierte streifenförmige Lichtstrahl erstrecken. Der individuell modulierte Lichtstrahl 3' trifft somit entlang einer Auftrefflinie 29 auf das holografische Aufzeichnungsmaterial, welche ebenfalls parallel zu der Trommeldrehachse 27 ist. Vorzugsweise liegt die Auftrefflinie 29 auf einer Verbindungslinie 31 der Spiegeldrehachse 17 und der Trommeldrehachse 27.

Während der Aufzeichnung des individualisierten Hologramms dreht sich die Trommel 15 im dargestellten Beispiel in Uhrzeigerrichtung, wie mittels eines Pfeils 33 angedeutet ist. In einer Tangentialebene 37 des holografischen Aufzeichnungsmaterials 13 an der Auftrefflinie 29 bewegt sich somit das Aufzeichnungsmaterial 13 mit einer Tangentialgeschwindigkeit v_{Film}, wie mittels eines entsprechenden Vektors 35 angezeigt ist. Eine Dreh- oder Schwenkgeschwindigkeit des Umlenkspiegels 11 wird so gewählt, dass ein ortsfester individuell modulierter Lichtstrahl immer an derselben Stelle des Films abgebildet würde. Dies ist gleichbedeutend damit, dass der Umlenkspiegel 11 mit einer solchen Geschwindigkeit bewegt wird, dass sich die Auftrefflinie 29 in der Tangentialebene 37 mit einer Geschwindigkeit v_{Spiegel}, wie mittels eines Vektors 39 angezeigt ist, bewegt, die der Tangentialgeschwindigkeit des holografischen Aufzeichnungsmaterials v_{Film} entspricht (v_{Spiegel} = v_{Film}).

Aufgrund der Abscanngeschwindigkeit v_{scan} des Lichtstrahls 3, mit der der Spatial Light Modulator 5 abgescannt wird, würde sich die Auftrefflinie 29 in der Tangentialebene 37 bei sich nicht drehendem Umlenkspiegel 11 mit einer Geschwindigkeit m · v_{scan} entgegengesetzt zur Bewegungsrichtung des holografischen Aufzeichnungsmaterials bewegen, wie mittels eines Geschwindigkeitsvektors 41 angezeigt ist. Der Faktor m gibt hierbei die Vergrößerung der Abbildungsoptik 9 an. Würde man sich den Umlenkspiegel 11 wegdenken, so würde der individuell modulierte abgebildete Lichtstrahl 3' auf einem Schirm 43 abgebildet, dessen Abstand 45 von der Spiegeldrehachse 17 gleich dem Abstand 47 der Auftrefflinie 29 bzw. des holografischen Aufzeichnungsmaterials 13 bzw. der Tangentialebene 37 von der Spiegeldrehachse 17 ist. Um sicherzustellen, dass die Auftrefflinie 29 ortsfest bezüglich der Trommeldrehachse 27 verbleibt, ist somit dafür zu sorgen, dass die Geschwindigkeit des holografischen Aufzeichnungsmaterials v_{Film} gleich der Drehgeschwindigkeit des Spiegels bzw. der Geschwindigkeit v_{Spiegel} der Auftrefflinie 29 in der Tangentialebene 37 ist und die Geschwindigkeit m · v_{scan} der Auftrefflinie 29 aufgrund der Scangeschwindigkeit und der vergrößernden Abbildung betragsmäßig gleich und entgegengesetzt zu der Tangentialgeschwindigkeit des holografischen Aufzeichnungsmaterials v_{Film} ist, d.h. -m · v_{scan} = v_{Film} = v_{Spiegel}.

Um somit sicherzustellen, dass die Auftrefflinie 29 ortsfest bezüglich der Trommeldrehachse 27 verbleibt, ist entlang der Axialrichtung 27, d.h. aus der Zeichnungsebene heraustretend, außerhalb des Abbildungsbereichs des Hologramms, vorzugsweise neben der Trommel 15, ein positionsempfindlicher, lichtempfindlicher Sensor 49 angeordnet, der gestrichelt dargestellt ist und sich oberhalb der Zeichnungsebene befindet. Mit diesem ist es möglich, ein Wandern der Auftrefflinie in der Tangentialebene 37 zu detektieren. Hierfür ist der positionsempfindliche, lichtempfindliche Sensor 49 mit einem Regler 51 verbunden, der wiederum die Antriebseinheit 19 ansteuert, so dass ein geschlossener Regelkreis ausgebildet ist.
An der Trommel 15 ist ein Inkrementalgeber 53 angeordnet, über den die Stellung der Trommel 15 und somit eine Stellung des anliegenden holografischen Aufzeichnungsmaterials 13 ermittelbar ist. Über eine weitere Regeleinheit 55 kann so die Trommelantriebseinrichtung 25 geregelt werden oder alternativ eine Einheit, die die Abtastgeschwindigkeit des Lichtstrahls 3 bestimmt.

Wie sich aus den Strahlengängen des individuell modulierten Lichtstrahls 3'₍ᵢ₎ des abgebildeten individuell modulierten Lichtstrahls 3'₍ᵢ₎ und den Stellungen des Umlenkspiegels 11₍ᵢ₎ (i = 1, 2, 3) ergibt, die jeweils zu drei aufeinander folgenden Zeiten i = 1, 2, 3 eingezeichnet sind, ergibt es sich, dass sich bei dieser Ausführungsform ein Auftreffwinkel αᵢ gegen eine Flächennormale der Tangentialebene 37 gemessen, während der Aufzeichnung des individualisierten Hologramms geringfügig verändert.

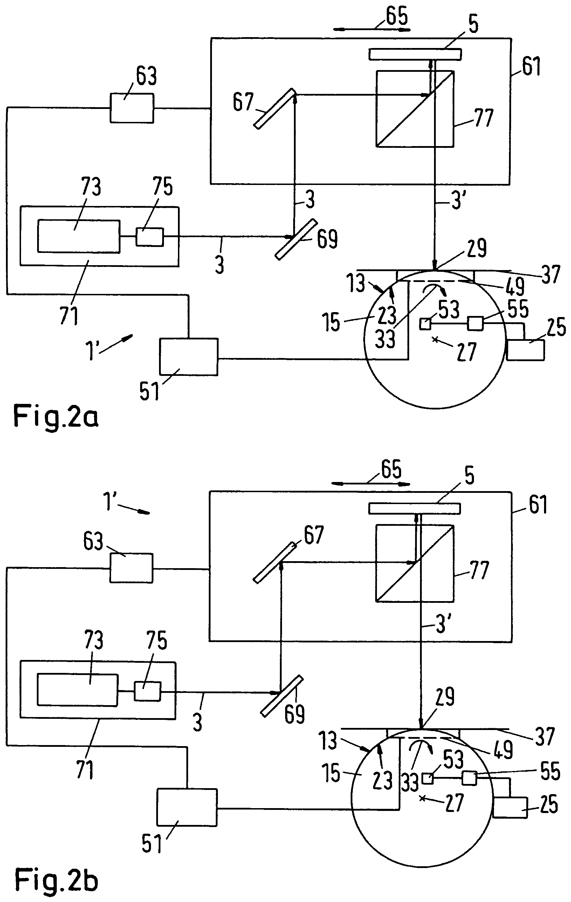

In Fig. 2a und 2b ist eine weitere Ausführungsform einer Vorrichtung 1' zum Herstellen eines individualisierten Hologramms schematisch zu unterschiedlichen aufeinander folgenden Zeitpunkten dargestellt. Gleiche technische Merkmale sind mit identischen Bezugszeichen versehen. Diese Ausführungsform der Vorrichtung 1' umfasst ein optisches Individualisierungssystem 61. Das optische Individualisierungssystem 61 ist quer zur Trommeldrehachse 27 mittels einer Verschiebeeinrichtung 63 translatorisch verschiebbar, wie mittels eines Doppelpfeils 65 angedeutet ist. Das optische Individualisierungssystem 61 kann beispielsweise einen translatorisch verschiebbaren optischen Tisch umfassen (nicht dargestellt). Das optische Individualisierungssystem 61 umfasst einen Ablenkspiegel 67, der unter 45° gegenüber einem von einem weiteren Ablenkspiegel 69 einfallenden streifenförmig oder zeilenförmig ausgebildeten kohärenten Lichtstrahls 3 einer Streifenlichtquelle 71 ausgerichtet ist. Die Streifenlichtquelle 71 umfasst vorzugsweise einen Laser 73, der kohärentes Licht erzeugt, sowie eine Streifenerzeugungsoptik 75, die beispielsweise als Zylinderlinse oder als holografisches optisches Element zum Erzeugen eines streifenförmigen Lichtstrahls ausgebildet sein kann.

Eine Translationsbewegung parallel zu der durch den Doppelpfeil 65 angegebenen Richtung bewirkt über den Ablenkspiegel 67 einen Strahlversatz auf einem polarisierenden Strahlteilerwürfel 77 bzw. dem Spatial Light Modulator 5. Der Spatial Light Modulator 5 ist in dieser Ausführungsform vorzugsweise als Liquid Crystal on Silicon (LCoS) ausgebildet. Bei diesem flächig ausgebildeten Spatial Light Modulator können die einzelnen Pixel wie bei einem LCD-Display frei angesteuert werden. Das individualisierende Muster für das individualisierte Hologramm kann hier ebenso wie bei der Ausführungsform nach Fig. 1 während der gesamten Abscanndauer dargestellt werden. Eine Synchronisation mit der Abscanngeschwindigkeit oder einer Geschwindigkeit v_{Film} des holografischen Aufzeichnungsmaterials 13 ist nicht erforderlich. Das von dem Ablenkspiegel 67 auf den Strahlteilerwürfel 77 fallende Licht des senkrecht zu Zeichenebene zeilenförmig ausgebildeten Lichtstrahls 3 wird an dem Strahlteilerwürfel 77 zunächst auf den Spatial Light Modulator 5 reflektiert, von dem Spatial Light Modulator pixelindividuell moduliert und zurückreflektiert. Hierbei wird eine Polarisation gegenüber der des einfallenden Lichtstrahls 3 verändert. Der individuell modulierte Lichtstrahl 3' passiert den Strahlteilerwürfel 77 und trifft an der Auftrefflinie 29 auf das holografische Aufzeichnungsmaterial 13, welches an der Trommel 15 anliegt.

Aus Vereinfachungsgründen ist keine Abbildungsoptik eingezeichnet. Eine Verschiebegeschwindigkeit vₜᵣₐₙₛ ist somit so zu wählen, dass sie der Geschwindigkeit des holografischen Aufzeichnungsmaterials in der Tangentialebene 37 aufgrund der Drehung der Trommel 15 um die Trommeldrehachse 27 entspricht, d.h. v_{Film} = vₜᵣₐₙₛ. Vorteil dieser Ausführungsform ist es, dass der individuell modulierte Lichtstrahl 3' immer an derselben Position und unter demselben Auftreffwinkel auf das holografische Aufzeichnungsmaterial trifft. Immer an derselben Position soll hierbei bedeuten, dass die Auftrefflinie 29 ortsfest bezüglich der Trommeldrehachse 27 ist. Bei dieser Ausführungsform bildet der positionsempfindliche, lichtempfindliche Sensor 49 zusammen mit dem Regler 51 und der Verschiebeeinrichtung 63 einen geschlossenen Regelkreis. Die Geschwindigkeit des holografischen Aufzeichnungsmaterials 13 bzw. der Trommel 15 wird wie bei der Ausführungsform nach Fig. 1 über den Inkrementalgeber 53, die weitere Regeleinheit 55 und die Trommelantriebseinrichtung 25 gesteuert und geregelt. Die Tangentialgeschwindigkeit v_{Film}, mit der sich das holografische Aufzeichnungsmaterial 13 in der Tangentialebene 37 bewegt, ist so gewählt, dass in dem holografischen Aufzeichnungsmaterial 13 während der Durchstrahlungsdauer, d.h. während des Passierens der Auftrefflinie 29, in dem holografischen Aufzeichnungsmaterial eine ausreichende Energiemenge deponiert wird, um das holografisch erzeugte Interferenzmuster in dem holografischen Aufzeichnungsmaterial 13 zu speichern.

In Fig. 2b ist eine zeitlich verzögerte Stellung des optischen Systems 61 dargestellt. Auch das holografische Aufzeichnungsmaterial 13 hat sich aufgrund der Drehung der Trommel 15 um die Trommeldrehachse 27 im Uhrzeigersinn, d.h. nach "rechts" in der Zeichnungsebene, bewegt. Der sich jetzt an der Auftrefflinie befindliche Abschnitt des holografischen Aufzeichnungsmaterials 13 korrespondiert somit mit Informationen, die auf dem Spatial Light Modulator 5 "links" (bezogen auf die Zeichnungsebene) von den Informationen befinden, die in Fig. 2a auf das holografische Aufzeichnungsmaterial 13 abgebildet wurden.

Die in Zusammenhang mit der Ausführungsform nach Fig.1 beschriebenen Regelkreise wirken bei der Ausführungsform nach Fig. 2a und 2b entsprechend.

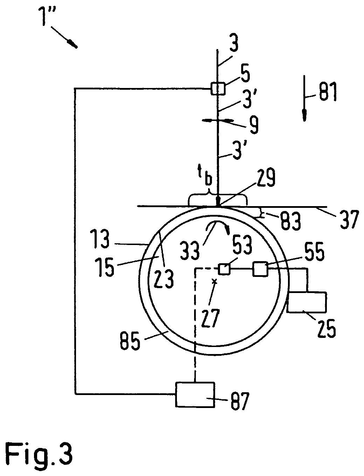

In Fig. 3 ist ein Vergleichsbeispiel gezeigt, in dem ein Spatial Light Modulator 5 als zeilen- oder streifenförmiges Display ausgebildet ist. Dieses umfasst eine oder mehrere Zeilen von Pixeln, wobei sich die Pixelzeilen senkrecht zur Zeichenebene erstrecken. Bei dem zeilenförmigen Display kann es sich beispielsweise um ein LCD-Display handeln. Der streifen- oder zeilenförmig senkrecht zur Zeichenebene ausgebildete Lichtstrahl 3 trifft auf den streifen- oder zeilenförmig ausgebildeten Spatial Light Modulator 5 und wird individuell moduliert. Der individuell modulierte Lichtstrahl 3' trifft dann auf das holografische Aufzeichnungsmaterial 13, welches anliegend an einer Trommel 15 zugeführt wird, in die ein holografischer Master 23 eingearbeitet ist. Eine Belichtungsdauer t_{b} für eine Pixelzeile oder einen Pixelstreifen ist die Zeitdauer, in der die Pixelzeile oder der Pixelstreifen auf das holografische Abbildungsmaterial abgebildet wird. Während dieser Zeit bewegt sich das holografische Abbildungsmaterial um eine Strecke v_{Film} · t_{b} = s_{b}. Die Belichtung wird vorzugsweise so ausgeführt, dass sich hierdurch eine möglichst geringe Änderung einer Strahlführungslänge (Abbildungslänge) entlang der Ausbreitungsrichtung 81 des abgebildeten individuell modulierten Lichtstrahls 3' ergibt. Diesen Unterschied 83 in der Abbildungslänge muss über die Tiefenschärfe der Abbildungsoptik 9 kompensiert werden. Das von dem zeilenförmig bzw. streifenförmig ausgebildeten Spatial Light Modulator 5 dargestellte Muster wird synchronisiert mit der Drehung der Trommel 15 jeweils gewechselt, wenn das holografische Aufzeichnungsmaterial sich um eine Strecke s_{b} bewegt hat. Die so erzeugten individualisierten Hologramme weisen den Nachteil auf, dass, wenn ein vollflächiges Muster dargestellt werden soll, an den Kanten der einzelnen Pixelzeilen oder Pixelstreifen Störungen auftreten, die aus der ungleichmäßig langen Ausleuchtung des Filmmaterials mit derselben individuellen Information herrührt.

Um eine Synchronisation der Trommeldrehgeschwindigkeit mit der Änderung der mittels des zeilenförmig ausgebildeten Spatial Light Modulators 5 dargestellten individualisierenden Informationen zu erreichen, ist bei dem Vergleichsbeispiel nach Fig. 3 vorzugsweise auf der Mantelfläche der Trommel 15 ein an der Trommel 15 befestigter positionsempfindlicher, lichtempfindlicher vorzugsweise umlaufend ausgebildeter Sensor 85 angeordnet. In Abhängigkeit von den hiermit erfassten Signalen kann über eine Steuerung 87 eine Frequenz (Zeilenfrequenz) zur Änderung der mittels des zeilenförmig bzw. streifenförmig ausgebildeten Spatial Light Modulators 5 dargestellten Informationen geregelt werden. Ebenso kann die Ausführungsform nach Fig. 3 zusätzlich oder alternativ einen Inkrementalgeber 53 umfassen, dessen Signal alternativ oder zusätzlich ebenfalls zur Regelung der Zeilenfrequenz verwendet werden kann. Die Steuerung 87 kann in anderen Ausführungsformen mit der weiteren Regeleinheit 55 gemeinsam ausgeführt sein, um auch die Trommelantriebseinrichtung 25 anzusteuern.

Bei der Ausführungsform nach Fig. 2a und 2b ist der gewählte Auftreffwinkel α des individuell modulierten Lichtstrahls 3' auf das holografische Aufzeichnungsmaterial 13, gemessen gegen eine Flächennormale der Tangentialebene 37, in der dargestellten Konfiguration gleich Null gewählt (α = 0). Verschwenkt man jedoch das optische Individualisierungssystem 61 sowie den weiteren Umlenkspiegel 69 und die Lichtquelle 71 drehend um die Auftrefflinie 29, d.h. in der Zeichenebene, so können beliebige Auftreffwinkel zwischen -90° bis +90° eingestellt werden. Da bei der Ausführungsform nach Fig. 2 die Auftreffrichtung konstant ist, können stark winkelselektive holografische Master für die Abbildung verwendet werden. Auch bei der Ausführungsform nach Fig. 1 kann der mittlere Auftreffwinkel α in Grenzen eingestellt werden, indem ebenfalls eine Verschwenkung der an der Abbildung und Individualisierung des Lichtstrahls beteiligten Elemente um die Auftrefflinie 29 in der Zeichnungsebene erfolgt. Im Prinzip trifft dieses ebenfalls auf das Vergleichsbeispiel nach Fig. 3 zu, jedoch werden die Abbildungslängenunterschiede, die durch die Tiefenschärfe der Abbildungsoptik zu kompensieren sind, größer, wenn ein von 0° abweichender Auftreffwinkel gewählt wird.

Die beschriebenen Ausführungsformen stellen lediglich beispielhafte Ausführungsformen dar.

### Bezugszeichenliste

- 1, 1', 1": Vorrichtung zum Herstellen eines individualisierten Hologramms
- 3: Lichtstrahl
- 3': individuell modulierter Lichtstrahl
- 3'₍ᵢ₎: individuell modulierter Lichtstrahl zum Zeitpunkt i
- 5: Spatial Light Modulator
- 7: Pfeil
- 9: Abbildungsoptik
- 11₍ᵢ₎: Umlenkspiegel in der Stellung zum Zeitpunkt i
- 13: holografisches Aufzeichnungsmaterial
- 15: Trommel
- 17: Spiegeldrehachse
- 19: Antriebseinrichtung
- 21: gestrichelte Linie (Verdeutlichung der Kopplung der Antriebseinrichtung mit dem Umlenkspiegel)
- 23: holografischer Master
- 25: Trommelantriebseinrichtung
- 27: Trommeldrehachse
- 29: Auftrefflinie
- 31: Verbindungslinie
- 33: Pfeil
- 35: Geschwindigkeitsvektor v_{Film}
- 37: Tangentialebene
- 39: Geschwindigkeitsvektor v_{Spiegel}
- 41: Geschwindigkeitsvektor -m · v_{scan}
- 43: Schirm
- 45: Abstand Spiegeldrehachse - Schirm
- 47: Abstand Speigeldrehachse - Auftrefflinien/holografisches Aufzeichnungsmaterial/Tangentialebene
- 49: positionsempfindlicher lichtempfindlicher Sensor
- 51: Regler
- 53: Inkrementalgeber
- 55: weitere Regeleinheit
- 61: optisches System
- 63: Verschiebeeinrichtung
- 65: Doppelpfeil
- 67: Ablenkspiegel
- 69: weiterer Ablenkspiegel
- 71: Streifenlichtquelle
- 73: Laser
- 75: Streifenerzeugungsoptik
- 77: Strahlteilerwürfel
- 81: Ausbreitungsrichtung
- 83: Unterschied der Abbildungslänge
- 85: Sensor
- 87: Steuerung

## Patentansprüche

1. Verfahren zum Herstellen von individualisierten Hologrammen, bei dem
ein Lichtstrahl (3) erzeugt wird,
der Lichtstrahl (3) individuell moduliert wird,
holografisches Aufzeichnungsmaterial (13) auf einem holografischen Master (23) angeordnet und der individuell modulierte Lichtstrahl (3') so geführt wird, dass zumindest ein Teil des individuell modulierten Lichtstrahls (3') an dem holografischen Master (23) gebeugt und/oder reflektiert wird und in dem holografischen Aufzeichnungsmaterial (13) mit dem individuell modulierten Lichtstrahl (3') zur Interferenz gebracht wird, so dass sich in dem holografischen Aufzeichnungsmaterial (13) ein das individualisierte Hologramm repräsentierendes Interferenzmuster bildet, wobei der individuell modulierte Lichtstrahl (3') relativ zu dem holografischen Aufzeichnungsmaterial (13) und dem holografischen Master (23) bewegt wird, um den gesamten holografischen Master (23) abzutasten,
indem das Aufzeichnungsmaterial (13) auf dem holografischen Master (23) anliegend an eine zylindrische Trommel (15) angeordnet wird und die Trommel (15) zum Abtasten des holografischen Masters (23) um eine Trommeldrehachse (27) der Trommel (15) gedreht wird,
**dadurch gekennzeichnet, dass**
der Lichtstrahl als ein streifenförmiger oder zeilenförmiger Lichtstrahl erzeugt wird und der streifenförmige oder zeilenförmige Lichtstrahl (3) einen flächig ausgebildeten Spatial Light Modulator (5) abtastet, um individuell moduliert zu werden, wobei der individuell modulierte streifenförmige oder zeilenförmige Lichtstrahl (3') so geführt wird, dass dieser ortsfest bezüglich der Drehachse der Trommel entlang einer Auftrefflinie (29) auf die Trommel trifft, und wobei die durch den streifenförmigen oder zeilenförmigen Lichtstrahl (3') transportierte individuell modulierte Information synchronisiert mit der Trommelbewegung das auf dem Spatial Light Modulator dargestellte Muster durchläuft, indem der Lichtstrahl den Spatial Light Modulator in der Zeit abtastet, in der das holografische Aufzeichnungsmaterial und der holografische Master einmal mit ihrem gesamten Aufzeichnungsbereich die Auftrefflinie (29) passieren.

2. Verfahren nach Anspruch 1, **dadurch gekennzeichnet, dass** der individuell modulierte Lichtstrahl (3') über einen um eine Spiegeldrehachse (17) drehbar gelagerten Umlenkspiegel (11) auf das holografische Aufzeichnungsmaterial (13) gelenkt wird, der mit einer Drehgeschwindigkeit gedreht wird, dass der individuell modulierte Lichtstrahl (3') ortsfest bezogen auf die Trommeldrehachse (27) der Trommel (15) auf das Aufzeichnungsmaterial (13) auftrifft.

3. Verfahren nach Anspruch 2, **dadurch gekennzeichnet, dass** die Drehgeschwindigkeit des Umlenkspiegels (11) so festgelegt ist, dass für einen vor dem Umlenken ortsfesten, individuell modulierten Lichtstrahl (3') die Auftrefflinie (29) des individuell modulierten Lichtstrahls (3') auf dem holografischen Aufzeichnungsmaterial (13) sich in der Tangentialebene (37) des Aufzeichnungsmaterials (13) mit einer Geschwindigkeit v_{Spiegel} bewegen würde, die einer Tangentialgeschwindigkeit v_{Film} des holografischen Aufzeichnungsmaterials (13) aufgrund der Drehung der Trommel (15) entspricht, und eine Abtastgeschwindigkeit v_{scan} des streifenförmigen oder zeilenförmigen Lichtstrahls (3) auf dem flächig ausgebildeten Spatial Light Modulator (5) so festgelegt wird, dass die Auftrefflinie (29) des individuell modulierten Lichtstrahls (3') auf dem holografischen Aufzeichnungsmaterial (13) sich bei sich nicht drehendem Umlenkspiegel (11) in der Tangentialebene (37) mit einer Geschwindigkeit -m · v_{scan} bewegen würde, die die Tangentialgeschwindigkeit v_{Film} des holografischen Aufzeichnungsmaterials (13) aufgrund der Drehung der Trommel (15) kompensieren würde, wobei m die Vergrößerung bei der Abbildung des individuell modulierten Lichtstrahls (3') auf die Auftrefflinie (29) ist.

4. Verfahren nach Anspruch 1, **dadurch gekennzeichnet, dass** quer zur Trommeldrehachse (27) ein optisches System (61) translatorisch bewegt wird, so dass ein ortsfest in das optische System (61) einfallender Lichtstrahl (3) in einen den Spatial Light Modulator (5) abtastenden Lichtstrahl umgewandelt wird, wobei das optische System mindestens einen Strahlteiler (77) umfasst, und der Lichtstrahl (3) über den Strahlteiler (77) auf den Spatial Light Modulator (5) umgelenkt wird, und der von dem Spatial Light Modulator individuell modulierte Lichtstrahl (3') durch den Strahlteiler (77) auf das holografische Aufzeichnungsmaterial (13) gelenkt wird.

5. Verfahren nach Anspruch 4, **dadurch gekennzeichnet, dass** das optische System (61) zusätzlich den Spatial Light Modulator und einen relativ zu dem Strahlteiler (77) fest ausgerichteten Ablenkspiegel (67) umfasst, wobei das optische System (61) senkrecht zur Trommeldrehachse (27) und zu einer Auftreffrichtung des individuell modulierten Lichtstrahls (3') auf dem holografischen Aufzeichnungsmaterial (13) bewegt wird.

6. Verfahren nach einem der Ansprüche 1 bis 5, **dadurch gekennzeichnet, dass** die an der Erzeugung, Abbildung und individuellen Modulation des Lichtstrahls (3, 3') beteiligten Elemente (5, 9, 11, 61, 67, 69, 71, 77) und die Trommelachse (27) um eine durch die Auftrefflinie (29) des modulierten Lichtstrahls (3') festgelegte Schwenkachse relativ zueinander verschwenkt werden, um eine Auftreffrichtung des individuell modulierten Lichtstrahls (3') auf dem holografischen Aufzeichnungsmaterial (13) und dem holografischen Master (23) zu variieren.

7. Vorrichtung (1) zum Herstellen von individualisierten Hologrammen umfassend eine Lichtquelle zum Erzeugen eines kohärenten Lichtstrahls (3),
einen Modulator zum individuellen Modulieren des Lichtstrahls (3) in einen individuell modulierten Lichtstrahl (3'),
einen holografischen Master (23),
eine Zuführeinrichtung, mit der ein holografisches Aufzeichnungsmaterial (13) für eine Durchstrahlung mit dem individuell modulierten Lichtstrahl (3') auf dem holografischen Master (23) anordenbar ist, und Mitteln zur Führung des individuell modulierten Lichtstrahls (3'), welche derart ausgebildet sind, dass zumindest ein Teil des modulierten Lichtstrahls (3') an dem holografischen Master (23) gebeugt und/oder reflektiert wird und mit dem modulierten Lichtstrahl (3') in dem holografischen Aufzeichnungsmaterial (13) überlagert wird, so dass sich in dem holografischen Aufzeichnungsmaterial (13) ein das individualisierte Hologramm repräsentierendes Interferenzmuster bildet, wobei der modulierte Lichtstrahl (3') relativ zu dem holografischen Aufzeichnungsmaterial (13) und dem holografischen Master (23) bewegbar ist, um den gesamten holografischen Master (23) abzutasten, die Zuführeinrichtung eine um eine Trommeldrehachse (27) drehbare zylindrische Trommel (15) umfasst und ausgebildet ist, das holografische Aufzeichnungsmaterial (13) anliegend an die Trommel (15) auf dem Master (23) anzuordnen, wobei die Trommel (15) mit einer Trommelantriebseinrichtung (25) gekoppelt ist, um zum Abtasten des holografischen Masters (23) die Trommel (15) um die Trommeldrehachse (27) zu drehen, **dadurch gekennzeichnet, dass**
der Modulator ein flächig ausgebildeter Spatial Light Modulator (5) ist und eine Streifenerzeugungsoptik zum Erzeugen des Lichtstrahls als streifenförmiger oder zeilenförmiger Lichtstrahl (3) und Mittel zum Abtasten des flächig ausgebildeten Spatial Light Modulators (5) durch den streifenförmigen oder zeilenförmigen Lichtstrahl (3) vorgesehen sind, wobei mindestens eines der zum Führen und Abbilden des Lichtstrahls (3, 3') notwendigen Elemente so bewegbar ist, dass der individuell modulierte streifenförmige oder zeilenförmige Lichtstrahl (3') so geführt wird, dass dieser ortsfest bezüglich der Trommeldrehachse (27) entlang einer Auftrefflinie (29) auf die Trommel (15) trifft, und wobei die Vorrichtung Steuerungsmittel umfasst, die so ausgebildet sind, dass die durch den streifenförmigen oder zeilenförmigen Lichtstrahl (3') transportierte individuell modulierte Information synchronisiert mit der Trommelbewegung das auf dem Spatial Light Modulator dargestellte Muster durchläuft, indem der Lichtstrahl den Spatial Light Modulator (5) in der Zeit abtastet, in der das holografische Aufzeichnungsmaterial und der holografische Master einmal mit ihrem gesamten Aufzeichnungsbereich die Auftrefflinie (29) passieren.

8. Vorrichtung (1) nach Anspruch 7, **dadurch gekennzeichnet, dass** ein um eine Spiegeldrehachse (17) drehbar gelagerter Umlenkspiegel (11) relativ zu dem Spatial Light Modulator (5) und der Trommel (15) angeordnet ist, um den abgebildeten individuell modulierten Lichtstrahl (3') auf das holografische Aufzeichnungsmaterial (13) zu lenken.

9. Vorrichtung (1) nach Anspruch 8, **dadurch gekennzeichnet, dass** mit dem Umlenkspiegel eine Antriebseinrichtung (19) gekoppelt ist, die eine Drehgeschwindigkeit des Umlenkspiegels (11) so regelt, dass der Umlenkspiegel (11) mit einer Geschwindigkeit gedreht wird, so dass der individuell modulierte Lichtstrahl (3') ortsfest bezogen auf die Drehachse (27) der Trommel (15) auf das Aufzeichnungsmaterial (13) auftrifft.

10. Vorrichtung (1) nach Anspruch 9, **dadurch gekennzeichnet, dass** die Antriebseinrichtung (19) die Drehgeschwindigkeit des Umlenkspiegels (11) so regelt, dass für einen vor dem Umlenken ortsfesten, individuell modulierten Lichtstrahl (3') die Auftrefflinie (29) des individuell modulierten Lichtstrahls (3') auf dem holografischen Aufzeichnungsmaterial (13) sich in der Tangentialebene (37) des Aufzeichnungsmaterials (13) mit einer Geschwindigkeit v_{Spiegel} bewegen würde, die einer Tangentialgeschwindigkeit v_{Film} des holografischen Aufzeichnungsmaterials (13) und des Masters (23) aufgrund der Drehung der Trommel (15) entspricht und eine Abtastgeschwindigkeit V_{scan} des streifenförmigen oder zeilenförmigen Lichtstrahls (3) auf dem flächig ausgebildeten Spatial Light Modulator (5) so festgelegt ist, dass die Auftrefflinie (29) des individuell modulierten Lichtstrahls (3') auf dem holografischen Aufzeichnungsmaterial (13) sich bei sich nicht drehendem Umlenkspiegel (11) in der Tangentialebene (37) mit einer Geschwindigkeit -m · v_{scan} bewegen würde, die die Tangentialgeschwindigkeit v_{Film} des holografischen Aufzeichnungsmaterials (13) und des Masters (23) aufgrund der Drehung der Trommel (15) kompensieren würde, wobei m die Vergrößerung bei der Abbildung des individuell modulierten Lichtstrahls (3') auf die Auftrefflinie (29) ist.

11. Vorrichtung (1') nach Anspruch 7, **dadurch gekennzeichnet, dass** quer zur Trommeldrehachse (27) ein optisches System (61) translatorisch bewegbar ist, um einen ortsfest in das optische System (61) einfallenden Lichtstrahl (3) in einen den Spatial Light Modulator abtastenden Lichtstrahl (3) umzuwandeln, wobei das optische System mindestens einen Strahlteiler (77) umfasst und so angeordnet ist, dass der Lichtstrahl (3) über den Strahlteiler (77) auf den Spatial Light Modulator (5) umgelenkt wird und der von dem Spatial Light Modulator (5) individuell modulierte Lichtstrahl (3') durch den Strahlteiler (77) auf das holografische Aufzeichnungsmaterial (13) gelenkt wird.

12. Vorrichtung (1') nach Anspruch 11, **dadurch gekennzeichnet, dass** das optische System (61) zusätzlich den Spatial Light Modulator (5) und einen relativ zu dem Strahlteiler (77) fest ausgerichteten Ablenkspiegel (67) umfasst, wobei das optische System (61) senkrecht zur Trommeldrehachse (27) und zu einer Auftrefflinie (29) des individuell modulierten Lichtstrahls (3') auf das holografische Aufzeichnungsmaterial (13) translatorisch mittels einer Verschiebeeinrichtung (63) mit einer Verschiebegeschwindigkeit v_{Trans} bewegbar ist.

13. Vorrichtung (1, 1') nach einem der Ansprüche 8 bis 10 oder 11 bis 12, **dadurch gekennzeichnet, dass** in Richtung der Trommeldrehachse (27) außerhalb eines Ausleuchtungsbereichs für das individualisierte Hologramm, bevorzugt neben der Trommel (15), bevorzugt in der Tangentialebene (37) der Auftrefflinie (29) des individuell modulierten Lichtstrahls (3') auf das Aufzeichnungsmaterial (13) oder darüber mindestens ein positionsabhängiger lichtempfindlicher Sensor (49) angeordnet ist, wobei der individuell modulierte Lichtstrahl (3') so erzeugt wird, dass der positionsempfindliche, lichtempfindliche Sensor (49) beim Durchstrahlen des Aufzeichnungsmaterials von einem Randbereich des individuell modulierten Lichtstrahls (3') überstrichen wird und der mindestens eine Sensor in einen geschlossenen Regelkreis mit einem Regler (51) integriert ist, der für eine Regelung der Drehgeschwindigkeit des Umlenkspiegels (11) oder eine Verschiebegeschwindigkeit v_{Trans} des optischen Systems (61) ausgebildet ist, um eine Auftrefflinie (29) des Lichtstrahls auf das Aufzeichnungsmaterial (13) ortsfest bezüglich der Trommeldrehachse (27) zu halten.

## Claims

1. Method for producing individualised holograms, wherein
a light beam (3) is generated,
a light beam (3) is individually modulated,
holographic recording material (13) is arranged on a holographic master (23), and the individually modulated light beam (3') is guided in such a manner that at least part of the individually modulated light beam (3') is refracted and/or reflected on the holographic master (23) and brought into interference with the individually modulated light beam (3') in the holographic recording material (13), such that an interference pattern representing the individualised hologram is formed in the holographic recording material (13), wherein the individually modulated light beam (3') is moved relative to the holographic recording material (13) and to the holographic master (23), in order to scan the entire holographic master (23), in that the recording material (13) is arranged on the holographic master (23) resting on a cylindrical drum (15), and the drum (15) is rotated, for the scanning of the holographic master (23) about a drum rotation axis (27) of the drum (15),
**characterized in that**
the light beam is generated as a strip or line form light beam, and the strip or line form light beam (3) scans a flat-configured spatial light modulator (5) in order to be individually modulated, wherein the individually modulated strip or line form light beam (3') is guided in such a way that, in a fixed position in relation to the rotation axis of the drum, it impinges onto the drum along an impingement line (29), and wherein the individually modulated information transported by the strip or line form light beam (3') runs through the pattern represented on the spatial light modulator, synchronized with the drum movement, and **in that** the light beam scans the spatial light modulator in the time in which the holographic recording material and the holographic master pass the impingement line (29) once with their entire recording range.

2. Method according to claim 1, **characterised in that** the individually modulated light beam (3') is deflected onto the holographic recording material (13) by a deflection mirror (11) rotatably mounted about a mirror rotation axis (17), which rotates at a speed of rotation, and that the individually modulated light beam (3'), in a fixed position relative to the drum rotation axis (27) of the drum (15), impinges onto the recording material (13).

3. Method according to claim 2, **characterised in that** the rotation speed of the deflection mirror (11) is determined in such a way that, for an individually modulated light beam (3') of fixed position before the deflection, the impingement line (29) of the individually modulated light beam (3') on the holographic recording material (13) would move in the tangential plane (37) of the recording material (13) at a speed of vₘᵢᵣᵣₒᵣ, which corresponds to a tangential speed v_{Film} of the holographic recording material (13) due to the rotation of the drum (15), and a scanning speed v_{scan} of the strip or line form light beam (3) on the flat configured spatial light modulator (5) is determined in such a way that the impingement line (29) of the individually modulated light beam (3') on the holographic recording material (13), with the deflection mirror (11) not rotating, would move in the tangential plane (37) at a speed of -m · v_{scan,} which would compensate the tangential speed v_{Film} of the holographic recording material (13) due to the rotation of the drum (15), wherein m is the enlargement in the imaging of the individually modulated light beam (3') onto the impingement line (29).

4. Method according to claim 1, **characterised in that** an optical system (61) is moved in a translational movement transverse to the drum rotation axis (27), such that a fixed position light beam (3) impinging into the optical system (61) is converted into a light beam scanning the spatial light modulator (5), wherein the optical system comprises at least one beam splitter (77), and the light beam (3) is deflected via the beam splitter (77) onto the spatial light modulator (5), and the light beam (3') individually modulated by the spatial light modulator is deflected through the beam splitter (77) onto the holographic recording material (13),

5. Method according to claim 4, **characterised in that** the optical system (61) additionally comprises the spatial light modulator and a deflection mirror (67), oriented in a fixed position relative to the beam splitter (77), wherein the optical system (61) is moved perpendicular to the drum rotation axis (27) and to an impingement direction of the individually modulated light beam (3') on the holographic recording material (13).

6. Method according to any one of claims 1 to 5, **characterised in that** the elements (5, 9, 11, 61, 67, 69, 71, 77) involved in the generation, imaging, and individual modulation of the light beam (3, 3') and a drum axis (27) are pivoted relative to one another about the impingement line (29) of the modulated light beam (3'), in order to vary an impingement direction of the individually modulated light beam (3') on the holographic recording material (13) and the holographic master (23).

7. Device (1) for producing individualised holograms, comprising a light source for generating a coherent light beam (3), a modulator for the individual modulating of the light beam (3) into an individually modulated light beam (3'), a holographic master (23), a delivery device with which a holographic recording material (13) for a transillumination with the individually modulated light beam (3') can be arranged on the holographic master (23), and means for guiding the individually modulated light beam (3'), which are configured in such a way that at least a part of the modulated light beam (3') is refracted and/or reflected on the holographic master (23), and overlaid with the modulated light beam (3') in the holographic recording material (13), such that an interference pattern representing the individualised hologram forms in the holographic recording material (13), wherein the modulated light beam (3') can be moved relative to the holographic recording material (13) and to the holographic master (23), in order to scan the entire holographic master (23), the delivery device comprises a cylindrical drum (15) which is rotatable about a drum rotation axis (27), and is configured such as to arrange the holographic recording material (13) contacting the drum (15) on the master (23), wherein the drum (15) is coupled to a drum drive device (25) in order to rotate the drum (15) about the drum rotation axis (27) for the scanning of the holographic master (23), **characterised in that** the modulator is a flat-configured spatial light modulator (5) and strip-producing optics are provided for generating the light beam as a strip or line form light beam (3), and means for scanning the flat configured spatial light modulator (5) by the strip or line form light beam (3), wherein at least one of the elements necessary for the guiding and imaging of the light beam (3, 3') is movable, that the individually modulated strip or line form light beam (3') is guided in such a way that this, being in a fixed position relative to the drum rotation axis (27) impinges along an impingement line (29) onto the drum (15), and wherein the device comprises control means, which are configured in such a way that the individually modulated information transported by the strip or line form light beam (3') runs through the pattern represented on the spatial light modulator synchronised with the drum movement, **in that** the light beam scans the spatial light modulator (5) in the time in which the holographic recording material and the holographic master pass the impingement line (29) with their entire recording range.

8. Device (1) according to claim 7, **characterised in that** a deflection mirror (11), rotatably mounted about a mirror rotation axis (17), is arranged relative to the spatial light modulator (5) and the drum (15), in order to deflect the individually modulated light beam (3') onto the holographic recording material (13).

9. Device (1) according to claim 8, **characterised in that** a drive device (19) is coupled to the deflecting mirror, which regulates the rotation speed of the deflecting mirror (11) in such a way that the deflecting mirror (11) is rotated at a speed such that the individually modulated light beam (3') impinges onto the recording material (13) in a fixed position relative to the rotation axis (27) of the drum (15).

10. Device (1) according to claim 9, **characterised in that** the drive device (19) regulates the rotation speed of the deflection mirror (11) in such a way that, for an individually modulated light beam (3') which is of fixed position before the deflection, the impingement line (29) of the individually modulated light beam (3') on the holographic recording material (13) would move in the tangential plane (37) of the recording material (13) at a speed of vₘᵢᵣᵣₒᵣ, which corresponds to a tangential speed v_{Film} of the holographic recording material (13) and of the master (23) due to the rotation of the drum (15), and a scanning speed v_{scan} of the strip or line form light beam (3) on the flat-configured spatial light modulator (5) is determined in such a way that the impingement line (29) of the individually modulated light beam (3') on the holographic recording material (13) would move in the tangential plane (37) at a speed of -m · v_{scan} if the deflection mirror (11) were not rotating, said speed would compensate the tangential speed v_{Film} of the holographic recording material (13) and of the master (23) due to the rotation of the drum (15), wherein m is the enlargement of the imaging of the individually modulated light beam (3') onto the impingement line (29).

11. Device (1) according to claim 7, **characterised in that** an optical system (61) can be moved translationally transverse to the drum rotation axis (27) in order to convert a light beam (3) of fixed position impinging into the optical system (61) into a light beam (3) scanning the spatial light modulator, wherein the optical system comprises at least one beam splitter (77) and is arranged in such a way that the light beam (3) is deflected via the beam splitter (77) onto the spatial light modulator (5), and the light beam (3') individually modulated by the spatial light modulator (5) is deflected via the beam splitter (77) onto the holographic recording material (13).

12. Device (1) according to claim 11, **characterised in that** the optical system (61) additionally comprises the spatial light modulator (5) and a deflection mirror (67), oriented in a fixed position relative to the beam splitter (77), wherein the optical system (61) can be moved perpendicular to the drum rotation axis (27) and to an impingement line (29) of the individually modulated light beam (3') onto the holographic recording material (13) in translational manner by means of a displacement device (63) at a displacement speed v_{Trans}.

13. Device (1, 1') according to any one of claims 8 to 10 or 11 to 12, **characterised in that** at least one position-dependent light-sensitive sensor (49) is arranged in the direction of the drum rotation axis (27) outside an illumination range for the individualised hologram, preferably next to the drum (15), preferably in the tangential plane (37) of the impingement line (29) of the individually modulated light beam (3') onto the recording material (13) or above this, wherein the individually modulated light beam (3') is generated in such a way that the position-sensitive and light-sensitive sensor (49), at the transillumination of the recording material, is passed over by a peripheral region of the individually modulated light beam (3'), and the at least one sensor is integrated in a closed loop system with a controller (51) which is configured for the regulating of the rotational speed of the deflection mirror (11) or a displacement speed v_{Trans} of the optical system (61), in order to hold an impingement line (29) of the light beam onto the recording material (13) in a fixed position relative to the drum rotation axis (27).

## Revendications

1. Procédé de fabrication d'hologrammes individualisés, pour lequel
un faisceau de lumière (3) est généré,
le faisceau de lumière (3) est modulé individuellement,
un matériau de pose holographique (13) est agencé sur un maître holographique (23) et le faisceau de lumière (3') modulé individuellement est guidé de sorte qu'au moins une partie du faisceau de lumière (3') modulé individuellement soit diffractée et/ou réfléchie sur le maître holographique (23) et soit amenée en interférence dans le matériau de pose holographique (13) avec le faisceau de lumière (3') modulé individuellement de sorte que dans le matériau de pose holographique (13), un modèle d'interférence représentant l'hologramme individualisé se forme, dans lequel le faisceau de lumière (3') modulé individuellement est déplacé par rapport au matériau de pose holographique (13) et au maître holographique (23) afin de balayer le maître holographique (23) entier, en ce que le matériau de pose (13) est agencé sur le maître holographique (23) reposant contre un tambour cylindrique (15) et le tambour (15) est tourné pour le balayage du maître holographique (23) autour d'un axe de rotation de tambour (27) du tambour (15),
**caractérisé en ce que**
le faisceau de lumière est généré comme un faisceau de lumière en forme de bande ou ligne et le faisceau de lumière (3) en forme de bande ou ligne balaye un modulateur de lumière spatial (5) réalisé sur la surface afin d'être modulé individuellement,
dans lequel le faisceau de lumière (3') en forme de bande ou ligne modulé individuellement est guidé de sorte que celui-ci touche le tambour fixement par rapport à l'axe de rotation du tambour le long de la ligne d'incidence (29) et dans lequel les informations modulées individuellement transportées par le faisceau de lumière (3') en forme de bande ou ligne passent de manière synchronisée avec le mouvement de tambour par le modèle représenté sur le modulateur de lumière spatial, **en ce que** le faisceau de la lumière balaye le modulateur de lumière spatial au moment, où le matériau de pose holographique et le maître holographique passent une fois avec leur zone de pose entière la ligne d'incidence (29).

2. Procédé selon la revendication 1,
**caractérisé en ce que** le faisceau de lumière (3') modulé individuellement est dirigé par un miroir de renvoi (11) logé de manière rotative autour d'un axe de rotation de miroir (17) sur le matériau de pose holographique (13), qui est tourné à une vitesse de rotation, **en ce que** le faisceau de lumière (3') modulé individuellement touche le matériau de pose (13) fixement par rapport à l'axe de rotation de tambour (27) du tambour (15).

3. Procédé selon la revendication 2, **caractérisé en ce que** la vitesse de rotation du miroir de renvoi (11) est fixée de sorte que pour un faisceau de lumière (3') modulé individuellement, fixe avant le renvoi, la ligne d'incidence (29) du faisceau de lumière (3') modulé individuellement se déplacerait sur le matériau de pose holographique (13) dans le plan tangentiel (37) du matériau de pose (13) avec une vitesse Vₘᵢᵣₒᵢᵣ qui correspond à une vitesse tangentielle V_{film} du matériau de pose holographique (13) en raison de la rotation du tambour (15), et une vitesse de balayage V_{scan} du faisceau de lumière (3) en forme de bande ou ligne est fixée sur le modulateur de lumière spatial (5) réalisé sur la surface de sorte que la ligne d'incidence (29) du faisceau de lumière (3') modulé individuellement se déplacerait sur le matériau de pose holographique (13) en cas de miroir de renvoi (11) ne se tournant pas dans le plan tangentiel (37) avec une vitesse -m' v_{scan} qui compenserait la vitesse tangentielle v_{film} du matériau de pose holographique (13) en raison de la rotation du tambour (15), dans lequel m est l'agrandissement lors de l'illustration du faisceau de lumière (3') modulé individuellement sur la ligne d'incidence (29).

4. Procédé selon la revendication 1, **caractérisé en ce qu'**un système optique (61) est déplacé par translation transversalement à l'axe de rotation de tambour (27) de sorte qu'un faisceau de lumière (3) incident fixement dans le système optique (61) soit converti en un faisceau de lumière balayant le modulateur de lumière spatial (5), dans lequel le système optique comporte au moins un séparateur de faisceau (77), et le faisceau de lumière (3) est dévié par le séparateur de faisceau (77) sur le modulateur de lumière spatial (5), et le faisceau de lumière (3') modulé individuellement par le modulateur de lumière spatial est dirigé par le séparateur de faisceau (77) sur le matériau de pose holographique (13).

5. Procédé selon la revendication 4, **caractérisé en ce que** le système optique (61) comporte en outre le modulateur de lumière spatial et un miroir de renvoi (67) orienté fixement par rapport au séparateur de faisceau (77), dans lequel le système optique (61) est déplacé perpendiculairement à l'axe de rotation de tambour (27) et à un sens d'incidence du faisceau de lumière (3') modulé individuellement sur le matériau de pose holographique (13).

6. Procédé selon l'une des revendications 1 à 5, **caractérisé en ce que** les éléments (5, 9, 11, 61, 67, 69, 71, 77) participant à la génération, l'illustration et la modulation individuelle du faisceau de lumière (3, 3') et l'axe de tambour (27) sont pivotés autour d'un axe de pivotement fixé par la ligne d'incidence (29) du faisceau de lumière (3') modulé l'un par rapport à l'autre afin de varier un sens d'incidence du faisceau de lumière (3') modulé individuellement sur le matériau de pose holographique (13) et le maître holographique (23).

7. Dispositif (1) de fabrication d'hologrammes individualisés comprenant une source de lumière pour la génération d'un faisceau de lumière (3) cohérent, un modulateur pour la modulation individuelle du faisceau de lumière (3) dans un faisceau de lumière (3') modulé individuellement,
un maître holographique (23),
un dispositif d'amenée, avec lequel un matériau de pose holographique (13) peut être agencé pour une irradiation avec le faisceau de lumière (3') modulé individuellement sur le maître holographique (23), et des moyens pour le guidage du faisceau de lumière (3') modulé individuellement qui sont réalisés de telle manière qu'au moins une partie du faisceau de lumière (3') modulé soit diffractée et/ou réfléchie sur le maître holographique (23) et soit recouverte par le faisceau de lumière (3') modulé dans le matériau de pose holographique (13) de sorte que dans le matériau de pose holographique (13), un modèle d'interférence représentant l'hologramme individualisé se forme, dans lequel le faisceau de lumière (3') modulé est mobile par rapport au matériau de pose holographique (13) et au maître holographique (23) afin de balayer le maître holographique (23) entier, le dispositif d'amenée comporte un tambour (15) cylindrique rotatif autour d'un axe de rotation de tambour (27) et est réalisé afin d'agencer le matériau de pose holographique (13) reposant contre le tambour (15) sur le maître (23), dans lequel le tambour (15) est couplé à un dispositif d'entraînement de tambour (25) afin de tourner pour le balayage du maître holographique (23) le tambour (15) autour de l'axe de rotation de tambour (27), **caractérisé en ce que** le modulateur est un modulateur de lumière spatial (5) réalisé sur la surface et une optique de génération de bande pour la génération du faisceau de lumière comme faisceau de lumière (3) en forme de bande ou ligne et des moyens pour le balayage du modulateur de lumière spatial (5) réalisé sur la surface sont prévus par le faisceau de lumière (3) en forme de bande ou ligne, dans lequel au moins un des éléments nécessaires au guidage et à l'illustration du faisceau de lumière (3, 3') est mobile de sorte que le faisceau de lumière (3') en forme de bande ou ligne modulé individuellement soit guidé de sorte que celui-ci touche fixement le tambour (15) par rapport à l'axe de rotation de tambour (27) le long d'une ligne d'incidence (29), et dans lequel le dispositif comporte des moyens de commande qui sont réalisés de sorte que les informations modulées individuellement transportées par le faisceau de lumière (3') en forme de bande ou ligne passent de manière synchronisée avec le mouvement de tambour par le modèle représenté sur le modulateur de lumière spatial, **en ce que** le faisceau de lumière balaye le modulateur de lumière spatial (5) au moment, où le matériau de pose holographique et le maître holographique passent une fois avec leur zone de pose entière la ligne d'incidence (29).

8. Dispositif (1) selon la revendication 7, **caractérisé en ce qu'**un miroir de renvoi (11) logé de manière rotative autour d'un axe de rotation de miroir (17) est agencé par rapport au modulateur de lumière spatial (5) et au tambour (15) afin de diriger le faisceau de lumière (3') modulé individuellement illustré sur le matériau de pose holographique (13).

9. Dispositif (1) selon la revendication 8, **caractérisé en ce qu'**avec le miroir de renvoi, un dispositif d'entraînement (19) est couplé, lequel régule une vitesse de rotation du miroir de renvoi (11) de sorte que le miroir de renvoi (11) soit tourné avec une vitesse de sorte que le faisceau de lumière (3') modulé individuellement touche le matériau de pose (13) fixement par rapport à l'axe de rotation (27) du tambour (15).

10. Dispositif (1) selon la revendication 9, **caractérisé en ce que** le dispositif d'entraînement (19) régule la vitesse de rotation du miroir de renvoi (11) de sorte que pour un faisceau de lumière (3') modulé individuellement, fixe avant le renvoi, la ligne d'incidence (29) du faisceau de lumière (3') modulé individuellement sur le matériau de pose holographique (13) se déplacerait dans le plan tangentiel (37) du matériau de pose (13) avec une vitesse vₘᵢᵣₒᵢᵣᵣ, qui correspond à une vitesse tangentielle v_{film} du matériau de pose holographique et du maître (23) en raison de la rotation du tambour (15) et une vitesse de balayage V_{scan} du faisceau de lumière en forme de bande ou ligne (3) est fixée sur le modulateur de lumière spatial réalisé sur la surface (5) de sorte que la ligne d'incidence (29) du faisceau de lumière (3') modulé individuellement se déplacerait sur le matériau de pose holographique (13) en cas de miroir de renvoi (11) ne se tournant pas dans le plan tangentiel (37) avec une vitesse -m' v_{scan}, qui compenserait la vitesse tangentielle v_{film} du matériau de pose holographique et du maître (23) en raison de la rotation du tambour (15), dans lequel m est l'agrandissement lors de l'illustration du faisceau de lumière (3') modulé individuellement sur la ligne d'incidence (29).

11. Dispositif (1') selon la revendication 7, **caractérisé en ce que** transversalement à l'axe de rotation de tambour (27), un système optique (61) est mobile par translation afin de convertir un faisceau de lumière (3) incident fixement dans le système optique (61) en un faisceau de lumière (3) balayant le modulateur de lumière spatial, dans lequel le système optique comporte un séparateur de faisceau (77) et est agencé de sorte que le faisceau de lumière (3) soit dévié par le biais du séparateur de faisceau (77) sur le modulateur de lumière spatial (5) et le faisceau de lumière (3') modulé individuellement par le modulateur de lumière spatial (5) soit dirigé par le séparateur de faisceau (77) sur le matériau de pose holographique (13).

12. Dispositif (1') selon la revendication 11, **caractérisé en ce que** le système optique (61) comporte en outre le modulateur de lumière spatial (5) et un miroir de renvoi (67) orienté fixement par rapport au séparateur de faisceau (77), dans lequel le système optique (61) est mobile perpendiculairement à l'axe de rotation de tambour (27) et à une ligne d'incidence (29) du faisceau de lumière (3') modulé individuellement sur le matériau de pose holographique (13) par translation à l'aide d'un dispositif de déplacement (63) avec une vitesse de déplacement vₜᵣₐₙₛ.

13. Dispositif (1, 1') selon l'une des revendications 8 à 10 ou 11 à 12, **caractérisé en ce qu'**en direction de l'axe de rotation de tambour (27) en dehors d'une zone d'éclairage pour l'hologramme individualisé, de préférence près du tambour (15), de préférence dans le plan tangentiel (37) de la ligne d'incidence (29) du faisceau de lumière (3') modulé individuellement sur le matériau de pose (13) ou dessus, au moins un capteur (49) sensible à la lumière dépendant de la position est agencé, dans lequel le faisceau de lumière (3') modulé individuellement est généré de sorte que le capteur (49) sensible à la lumière, sensible à la position soit balayé lors de l'irradiation du matériau de pose par une zone de bord du faisceau de lumière (3') modulé individuellement et l'au moins un capteur est intégré dans un circuit de régulation fermé avec un régulateur (51) qui est réalisé pour une régulation de la vitesse de rotation du miroir de renvoi (11) ou une vitesse de déplacement vₜᵣₐₙₛ du système optique (61) afin de maintenir une ligne d'incidence (29) du faisceau de lumière sur le matériau de pose (13) fixement par rapport à l'axe de rotation de tambour (27).
